(19) **Europäisches Patentamt / European Patent Office / Office européen des brevets**

(11) **EP 4 738 982 A2**

(12) **EUROPEAN PATENT APPLICATION**

(43) Date of publication:
06.05.2026  Bulletin 2026/19

(21) Application number: 26166104.5

(22) Date of filing: 05.10.2021

(51) International Patent Classification (IPC):
*H04W 76/28* (2018.01)

(52) Cooperative Patent Classification (CPC):
H04W 52/0216; H04W 52/0229; H04W 76/14;
H04W 76/28; H04W 4/46; H04W 92/18; Y02D 30/70

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority:  06.10.2020  JP 2020169444

(62) Document number(s) of the earlier application(s) in
accordance with Art. 76 EPC:
21877620.1 / 4 210 432

(71) Applicant: Kyocera Corporation
Kyoto-shi, Kyoto 612-8501 (JP)

(72) Inventor: FUJISHIRO, Masato
Kyoto, 612-8501 (JP)

(74) Representative: Viering, Jentschura & Partner
mbB
Patent- und Rechtsanwälte
Am Brauhaus 8
01099 Dresden (DE)

Remarks:
This application was filed on 19-03-2026 as a
divisional application to the application mentioned
under INID code 62.

(54) **COMMUNICATION CONTROL METHOD**

(57)  In an embodiment, a communication control method is a communication control method in a mobile communication system that includes a first user equipment and a second user equipment and can perform sidelink communication between the first user equipment and the second user equipment. The communication control method includes, when the first user equipment transmits a Radio Resource Control (RRC) message including configuration information related to the sidelink communication, and discontinuous reception is configured between the first user equipment and the second user equipment, performing, by the first user equipment, waiting processing for reception of an RRC response message responding to the RRC message regardless of a configuration of the discontinuous reception. The communication control method includes transmitting, by the second user equipment, the RRC response message responding to the RRC message when receiving the RRC message, and receiving, by the first user equipment, the RRC response message.

RRC RECONFIGURATION SIDELINK MESSAGE   RECEPTION WAITING

RRC RECONFIGURATION SIDELINK COMPLETE MESSAGE

**FIG. 10(A)**

START — S100

WHEN RRC RECONFIGURATION SIDELINK MESSAGE IS TRANSMITTED AND SIDELINK DRX IS CONFIGURED, PERFORM RECEPTION WAITING PROCESSING REGARDLESS OF CONFIGURATION OF SIDELINK DRX — S105

WHEN RRC RECONFIGURATION SIDELINK COMPLETE MESSAGE IS RECEIVED, PERFORM OPERATION IN ACCORDANCE WITH SIDELINK DRX. — S106

END — S107

**FIG. 10(B)**

EP 4 738 982 A2

**Description**

TECHNICAL FIELD

The present invention relates to a communication control method used in a mobile communication system.

BACKGROUND OF INVENTION

The Third Generation Partnership Project (3GPP), which is a standardization project for mobile communication systems, has defined a standard for sidelink communication in which user equipments communicate wirelessly with each other (for example, see NPL 1). The sidelink communication enables implementation of, for example, Vehicle to Everything (V2X) services including Vehicle to Vehicle (V2V) communication.

In the sidelink communication, user equipments may communicate wirelessly with each other by using resources scheduled by the Next Generation-Radio Access Network (NG-RAN) (mode 1). In the sidelink communication, a user equipment may autonomously select resources from a resource pool for wireless communication (mode 2).

When the user equipment is within a coverage range of the NG-RAN, the sidelink communication is supported regardless of the Radio Resource Control (RRC) state of the user equipment. Furthermore, the sidelink communication is supported even when the user equipment is outside the coverage range of the NG-RAN.

Thus, for example, when the user equipment is within the coverage range of the NG-RAN, the user equipment can communicate wirelessly with another user equipment by using scheduled resources or can autonomously select resources for wireless communication. On the other hand, when the user equipment is outside the coverage range of the NG-RAN, the user equipment can autonomously select resources and communicate wirelessly with another user equipment.

The sidelink communication supports unicast transmission, groupcast transmission, and broadcast transmission. In the unicast transmission, paired peer user equipments transmit and receive user traffic to and from each other. In the groupcast transmission, user equipments belonging to a group within the sidelink transmit and receive user traffic to and from each other. In the broadcast transmission, user equipments within the sidelink transmit and receive user traffic to and from each other.

CITATION LIST

NON-PATENT LITERATURE

NPL 1: 3GPP TS 38.300 V16.2.0 (2020-07)

SUMMARY

In a first aspect, a communication control method is a communication control method in a mobile communication system that includes a first user equipment and a second user equipment and can perform sidelink communication between the first user equipment and the second user equipment. The communication control method includes, when the first user equipment transmits a Radio Resource Control (RRC) message including configuration information related to the sidelink communication, and discontinuous reception is configured between the first user equipment and the second user equipment, performing, by the first user equipment, waiting processing for reception of an RRC response message responding to the RRC message regardless of a configuration of the discontinuous reception. The communication control method includes, when the second user equipment receives the RRC message, transmitting, by the second user equipment, the RRC response message responding to the RRC message, and receiving, by the first user equipment, the RRC response message.

In a second aspect, a communication control method is a communication control method in a mobile communication system that includes a first user equipment and a second user equipment and can perform sidelink communication between the first user equipment and the second user equipment. The communication control method includes resetting a frame number of a predetermined frame at a timing when the first user equipment transmits a first RRC message including configuration information related to the sidelink communication or at a timing when the second user equipment receives the first RRC message transmitted from the first user equipment. Alternatively, the communication control method includes resetting the frame number of the predetermined frame at a timing when the second user equipment transmits a second RRC message related to completion of a configuration of the sidelink communication or at a timing when the first user equipment receives the second RRC message transmitted from the second user equipment.

In a third aspect, a communication control method is a communication control method in a mobile communication system that includes a first user equipment and a second user equipment and can perform sidelink communication between the first user equipment and the second user equipment. The communication control method includes transmitting, by the first user equipment, an RRC message including first configuration information related to a configuration of discontinuous reception in the sidelink communication of the first user equipment and second configuration information related to a configuration of discontinuous reception in the sidelink communication of the second user equipment, and receiving, by the second user equipment, the RRC message.

In a fourth aspect, a communication control method is a communication control method in a mobile communication system that includes a base station apparatus, a first user equipment, and a second user equipment and can perform sidelink communication between the first user equipment and the second user equipment. The first user equipment and the second user equipment can communicate wirelessly with the base station apparatus. The communication control method includes transmitting, by the first user equipment, an RRC message including configuration information related to discontinuous reception in the sidelink communication, and receiving, by the second user equipment, the RRC message. The communication control method includes transmitting, by the second user equipment to the first user equipment, an adjustment request message requesting an adjustment of a configuration of the discontinuous reception in the sidelink communication, or transmitting, by the second user equipment to the base station apparatus, a sidelink information message requesting a change in the configuration of the discontinuous reception in the sidelink communication.

In a fifth aspect, a communication control method is a communication control method in a mobile communication system that includes a base station apparatus, a first user equipment, and a second user equipment and can perform sidelink communication between the first user equipment and the second user equipment. The first user equipment and the second user equipment can communicate wirelessly with the base station apparatus. The communication control method includes transmitting, by the base station apparatus, an RRC message including configuration information related to a configuration of discontinuous reception in the sidelink communication, or broadcasting, by the base station apparatus, system information including the configuration information, and, by a first user equipment and a second user equipment, receiving the RRC message and then applying the configuration of the discontinuous reception in the sidelink communication.

BRIEF DESCRIPTION OF THE DRAWINGS

FIG. 1 is a diagram illustrating a configuration example of a mobile communication system according to an embodiment.

FIG. 2 is a diagram illustrating a configuration example of a user equipment according to an embodiment.

FIG. 3 is a diagram illustrating a configuration example of a base station according to an embodiment.

FIG. 4 is a diagram illustrating a configuration example of a protocol stack of a user plane of a Uu interface.

FIG. 5 is a diagram illustrating a configuration example of a protocol stack of a control plane of the Uu interface.

FIG. 6 is a diagram illustrating a configuration example of a protocol stack of a user plane of a PC5 interface.

FIG. 7 is a diagram illustrating a configuration example of a protocol stack of a control plane of the PC5 interface.

FIG. 8(A) is a diagram illustrating an example in which UEs communicate wirelessly with each other, and FIG. 8(B) is a diagram illustrating an operation example of Example 1.

FIG. 9(A) is a diagram illustrating an example of On-duration and Off-duration, and FIG. 9(B) is a diagram illustrating an example of transmission and reception timings of messages.

FIG. 10(A) is a diagram illustrating an example of transmission and reception of messages, and

FIG. 10(B) is a diagram illustrating an operation example of Example 1.

FIGs. 11(A) and 11(B) are diagrams illustrating operation examples of Example 2.

FIG. 12 is a diagram illustrating an operation example of Example 2.

FIGs. 13(A) and 13(B) are diagrams illustrating operation examples of Example 2.

FIG. 14 is a diagram illustrating an operation example of Example 2.

FIGs. 15(A) and 15(B) are diagrams illustrating operation examples of Example 3.

FIG. 16 is a diagram illustrating an operation example of Example 3-1.

FIG. 17 is a diagram illustrating an operation example of Example 4.

FIG. 18 is a diagram illustrating an operation example of Example 5.

FIG. 19 is a diagram illustrating an operation example of Example 6.

DESCRIPTION OF EMBODIMENTS

A mobile communication system according to an embodiment will be described with reference to the drawings. In the description of the drawings, the same or similar parts are denoted by the same or similar reference signs.

Configuration of Mobile Communication System

First, a configuration example of a mobile communication system according to an embodiment will be described. While the mobile communication system according to an embodiment is a 3GPP 5G system, Long Term Evolution (LTE) may be at least partially applied to the mobile communication system.

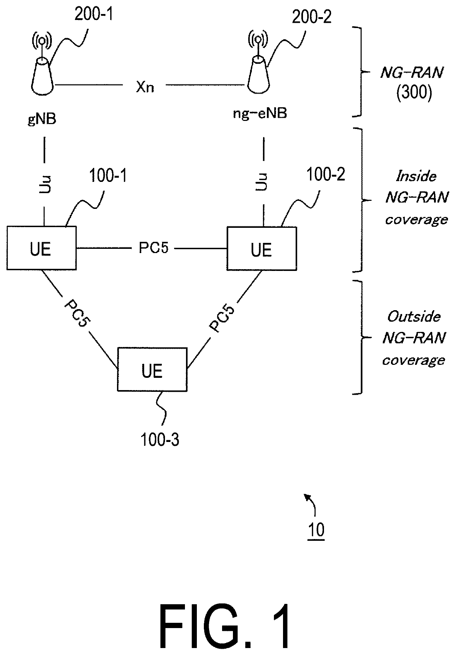

FIG. 1 is a diagram illustrating a configuration example of a mobile communication system 10 according to an embodiment.

As illustrated in FIG. 1, the mobile communication system 10 includes a user equipment (UE) 100, and a 5G wireless access network (NG-RAN) 300.

The UE 100 is a mobile apparatus. The UE 100 may be any apparatus as long as the apparatus is used by a user. Examples of the UE 100 include apparatuses that can perform wireless communication, such as a mobile phone terminal (including a smartphone), a tablet terminal, a laptop PC, a communication module (including a communication card or a chip set), a sensor, an apparatus provided on a sensor, a vehicle, an apparatus provided on a vehicle (Vehicle UE), a flying object, and an apparatus provided on a flying object (Aerial UE). Note that the UE 100 in the present embodiment can communicate directly wirelessly with another UE by using a sidelink communication.

The NG-RAN 300 includes a base station apparatus 200-1 referred to as a "next generation Node B" ("gNB") in the 5G system. The NG-RAN 300 includes a base station apparatus 200-2 that is an LTE base station capable of cooperating with New Radio (NR). The base station apparatus 200-2 is referred to as "ng-eNB".

The gNB 200-1 and the ng-eNB 200-2 may be referred to as NG-RAN nodes. The gNB 200-1 and the ng-eNB 200-2 are interconnected via an Xn interface that is an inter-base station interface. The gNB 200-1 and the ng-eNB 200-2 manage one or more cells. Each of the gNB 200-1 and the ng-eNB 200-2 communicates wirelessly with the UE 100 that has established a connection to the cell of the gNB 200-1 or the ng-eNB 200-2. The gNB 200-1 and the ng-eNB 200-2 has a Radio Resource Management (RRM) function, a function of routing user data (hereinafter simply referred to as "data"), a measurement control function for mobility control and scheduling, and the like. The "cell" is used as a term representing a minimum unit of wireless communication area. The "cell" is also used as a term representing a function or a resource for performing wireless communication with the UE 100. One cell belongs to one carrier frequency.

As illustrated in FIG. 1. the gNB 200-1, and the ng-eNB 200-2 are connected to each other via an Xn interface. A Uu interface corresponding to an interface between the base station and the user equipment connects the gNB 200-1 and the UE 100-1 and connects the ng-eNB 200-2 and the UE 100-2. A PC5 interface corresponding to an inter-user-equipment interface connects the UEs 100-1 to 100-3 one another.

Note that the 3GPP defines NR sidelink communication and V2X sidelink communication. The NR sidelink communication is, for example, communication in which the New Radio (NR) technology is used to enable at least V2X communication among UEs 100-1 to 100-3 with no passage through a network node. The V2X sidelink communication is, for example, communication in which the Evolved-Universal Terrestrial Radio Access (E-UTRA) technology is used to enable V2X communication with no passage through a network node. Hereinafter, the NR sidelink communication and the V2X sidelink communication may be referred to as "sidelink communication" without being distinguished from each other. Thus, the "sidelink communication" may include the NR sidelink communication or the V2X sidelink communication.

In FIG. 1, the gNB 200-1 may be connected to a 5G Core network (5GC) corresponding to a core network of 5G, and the ng-eNB 200-2 may be connected to an Evolved Packet Core (EPC) corresponding to a core network of LTE.

Alternatively, the gNB 200-1 may be connected to the EPC, and the ng-eNB 200-2 may be connected to the 5GC.

Note that of the gNB 200-1 and the ng-eNB 200-2, the gNB 200-1 will be described below as a representative example of the base station apparatus. The gNB 200-1 may be referred to as the gNB 200, and the UEs 100-1 to 100-3 may be referred to as the UE 100.

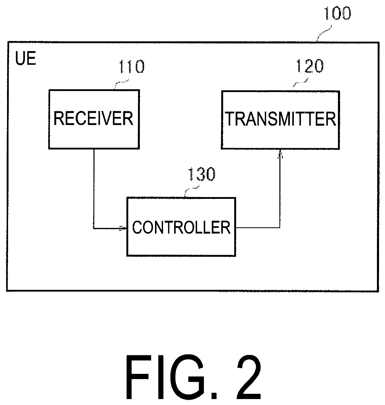

FIG. 2 is a diagram illustrating a configuration of the UE 100 (user equipment) according to an embodiment.

As illustrated in FIG. 2, the UE 100 includes a receiver 110, a transmitter 120, and a controller 130.

The receiver 110 performs various types of reception under control of the controller 130. The receiver 110 includes an antenna and a reception device. The reception device converts (down-converts) a radio signal received through the antenna into a baseband signal (a received signal) and outputs the resulting signal to the controller 130. Note that the UE 100 in the present embodiment can communicate wirelessly not only with the gNB 200 but also with another UE by sidelink communication. Accordingly, the receiver 110 can receive a message, data, or the like transmitted from another UE.

The transmitter 120 performs various types of transmission under control of the controller 130. The transmitter 120 includes an antenna and a transmission device. The transmission device converts (up-converts) a baseband signal output by the controller 130 (a transmission signal) into a radio signal and transmits the resulting signal through the antenna. In the present embodiment, the transmitter 120 can not only transmit data or the like to the gNB 200 but also transmit a message, data, or the like to another UE by sidelink communication.

The controller 130 performs various types of control in the UE 100. The controller 130 includes at least one processor and at least one memory electrically connected to the processor. The memory stores a program to be executed by the processor and information to be used for processing by the processor. The processor may include a baseband processor and a Central Processing Unit (CPU). The baseband processor performs modulation and demodulation, coding and decoding, and the like of a baseband signal. The CPU executes the program stored in the memory to thereby perform various types of processing. The controller 130 according to the present embodiment can perform various types of control or processing described in Examples below.

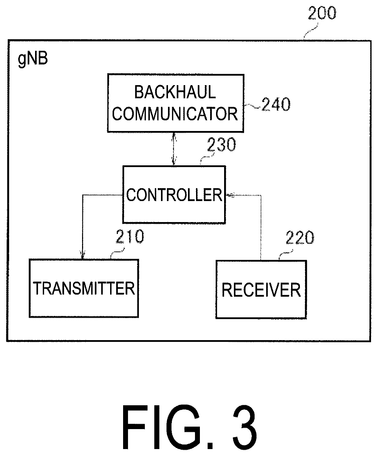

FIG. 3 is a diagram illustrating a configuration of the gNB 200 (base station) according to an embodiment.

As illustrated in FIG. 3, the gNB 200 includes a transmitter 210, a receiver 220, a controller 230, and a backhaul communicator 240.

The transmitter 210 performs various types of transmission under control of the controller 230. The transmitter 210 includes an antenna and a transmission device. The transmission device converts (up-converts) a baseband signal output by the controller 230 (a transmission signal) into a radio signal and transmits the resulting signal through the antenna.

The receiver 220 performs various types of reception under control of the controller 230. The receiver 220 includes an antenna and a reception device. The reception device converts (down-converts) a radio signal received through the antenna into a baseband signal (a received signal) and outputs the resulting signal to the controller 230.

The controller 230 performs various types of controls for the gNB 200. The controller 230 includes at least one processor and at least one memory electrically connected to the processor. The memory stores a program to be executed by the processor and information to be used for processing by the processor. The processor may include a baseband processor and a CPU. The baseband processor performs modulation and demodulation, coding and decoding, and the like of a baseband signal. The CPU executes the program stored in the memory to thereby perform various types of processing. The CPU may be replaced by a processor or a controller, such as a digital signal processor (DSP) or a field programmable gate array (FPGA).

The backhaul communicator 240 is connected to a neighboring base station via the inter-base station interface. The backhaul communicator 240 is connected to each node of the 5GC via an interface between the base station and the core network. Note that the gNB 200 may include a Central Unit (CU) and a Distributed Unit (DU) (i.e., functions are divided), and the two units may be connected via an F1 interface.

Protocol Stack in Uu Interface

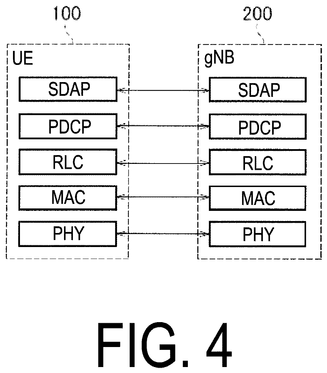

FIG. 4 is a diagram illustrating a configuration of a protocol stack of a radio interface of a user plane in the Uu interface, the user plane handling data.

As illustrated in FIG. 4, a radio interface protocol of the user plane in the Uu interface includes a physical (PHY) layer, a Medium Access Control (MAC) layer, a Radio Link Control (RLC) layer, a Packet Data Convergence Protocol (PDCP) layer, and a Service Data Adaptation Protocol (SDAP) layer.

The PHY layer performs coding and decoding, modulation and demodulation, antenna mapping and demapping, and resource mapping and demapping. Data and control information are transmitted between the PHY layer of the UE 100 and the PHY layer of the gNB 200 via a physical channel.

The MAC layer performs priority control of data, retransmission processing by Hybrid Automatic Repeat Request (ARQ) (HARQ), a random access procedure, or the like. Data and control information are transmitted between the MAC layer of the UE 100 and the MAC layer of the gNB 200 via a transport channel. The MAC layer of the gNB 200 includes a scheduler. The scheduler determines transport formats (transport block sizes, Modulation and Coding Schemes (MCSs)) in the uplink and the downlink and resource blocks to be allocated to the UE 100.

The RLC layer transmits data to the RLC layer on the receiving end by using functions of the MAC layer and the PHY layer. Data and control information are transmitted between the RLC layer of the UE 100 and the RLC layer of the gNB 200 via a logical channel.

The PDCP layer performs header compression and decompression, and encryption and decryption.

The SDAP layer performs mapping between an IP flow as the unit of Quality of Service (QoS) control performed by the core network and a radio bearer as the unit of QoS control performed by the Access Stratum (AS). Note that, when the RAN is connected to the EPC, the SDAP may not be provided.

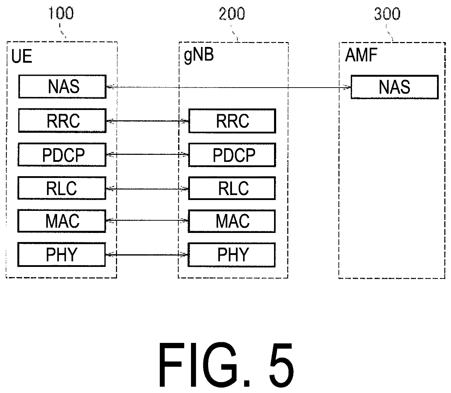

FIG. 5 is a diagram illustrating a configuration of a protocol stack of a radio interface of a control plane in the Uu interface, the control plane handling signalling (control signal). Note that FIG. 5 illustrates an Access and Mobility Management Function (AMF) as a node included in the 5GC.

As illustrated in FIG. 5, the protocol stack of the radio interface of the control plane in the Uu interface includes a Radio Resource Control (RRC) layer and a Non-Access Stratum (NAS) layer instead of the SDAP layer illustrated in FIG. 4.

RRC signalling for various configurations is transmitted between the RRC layer of the UE 100 and the RRC layer of the gNB 200. The RRC layer controls a logical channel, a transport channel, and a physical channel according to establishment, reestablishment, and release of a radio bearer. When a connection between the RRC of the UE 100 and the RRC of the gNB 200 (RRC connection) exists, the UE 100 is in an RRC connected state. When a connection between the RRC of the UE 100 and the RRC of the gNB 200 (RRC connection) does not exist, the UE 100 is in an RRC idle state. When the RRC connection is suspended, the UE 100 is in an RRC inactive state.

The NAS layer which is higher than the RRC layer performs session management, mobility management, and the like. NAS signalling is transmitted between the NAS layer of the UE 100 and the NAS layer of the AMF 300.

Note that the UE 100 includes an application layer other than the protocol of the radio interface.

Protocol Stack in PC5 Interface

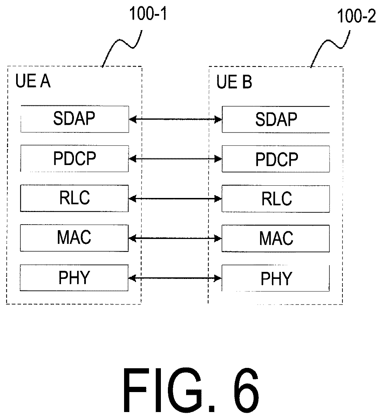

FIG. 6 is a diagram illustrating a configuration example of a protocol stack of a user plane in the PC5 interface.

As illustrated in FIG. 6, the protocol of the user plane in the PC5 interface includes a PHY layer, a MAC layer, an RLC layer, a PDCP layer and an SDAP layer, similarly to the protocol of the user plane in the Uu interface.

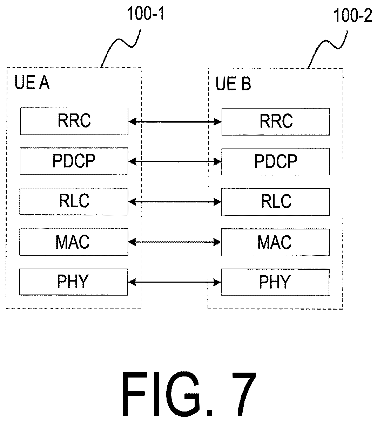

FIG. 7 is a diagram illustrating a configuration example of a protocol stack of a control plane in the PC5 interface.

As illustrated in FIG. 7, the protocol of the control plane in the PC5 interface also includes a PHY layer, a MAC layer, an RLC layer, a PDCP layer and an RRC layer, similarly to the protocol of the control plane in the Uu interface.

In the MAC layer of the user plane, data is transmitted via a transport layer (Sidelink Control Channel (SCCH), Sidelink Transport Channel (STCH), and Sidelink Broadcast Control Channel (SBCCH)) in the sidelink communication. In the MAC layer of the control plane, control information is transmitted via the transport layer in the sidelink communication. Furthermore, the MAC layer of at least one of the planes performs priority handling between uplink communication and sidelink communication, report of Channel State Information (CSI) of the sidelink, and the like.

The RRC layer of the control plane performs transfer of a PC5-RRC message between the peer UEs 100-1 and 100-2, maintenance and management of PC5-RRC connection, detection of a Failure of the sidelink radio link in the PC5-RRC connection, and the like.

Note that the PC5-RRC connection refers to a logical connection between two UEs 100 for a pair of IDs of a source and a destination in layer 2. The PC5-RRRC connection is established after the corresponding PC5 unicast link is established. The PC5-RRC connection and the PC5 unicast link have a one-to-one relationship. The UE 100 can have a plurality of PC5-RRC connections with one or more other UEs with different pairs of IDs of the source and destination in layer 2. The UE 100 opens the PC5-RRC connection when the UE 100 is not interested in the sidelink communication or when a layer 2 link opening procedure is complete. The UE 100-1 and UE 100-2 connected by PC5-RRC connection is brought into a PC5-RRC connected state.

Physical Channel of Sidelink Communication

Physical channels in the sidelink communication include a Physical Sidelink Control Channel (PSCCH) and a Physical Sidelink Shared Channel (PSSCH). Physical channels in the sidelink communication include a Physical Sidelink Feedback Channel (PSFCH) and a Physical Sidelink Broadcast Channel (PSBCH).

In the PSCCH, control information related to resources used by the UE 100 in the PSSCH is transmitted. In the PSCCH, different pieces of control information (Sidelink Control Information (SCI)) may be transmitted in two stages. In the PSSCH, Transport Blocks (TBs) of data, and a part of control information for an HARQ procedure and the like are transmitted. In the PSFCH, HARQ feedback information is transmitted from the UE 100-2, which is the reception target of the PSSCH transmission, to the UE 100-1, which has performed the transmission. The PSFCH may be applied to unicast transmission and groupcast transmission. In the PSBCH, Direct Frame Numbers (DFNs), information on synchronization, and the like are transmitted.

Operation Example

An operation example will be described. The operation example will be described in the following order.

(Example 1) Sidelink Discontinuous Reception (DRX) is not applied during an RRC reconfiguration sidelink sequence.

(Example 2) Periodic boundaries of the sidelink DRX are reset at the time of transmission or reception of an RRC reconfiguration sidelink message or an RRC reconfiguration complete sidelink message.

(Example 3) The UE 100 transmits the RRC reconfiguration sidelink message including both a sidelink DRX configuration of the UE 100 and a sidelink DRX configuration of the peer.

(Example 3-1) In Example 3, a plurality of sidelink DRX configurations are notified.

(Example 3-2) The UE 100 notifies the RRC reconfiguration sidelink message and the RRC reconfiguration complete sidelink message, each of the messages including only the sidelink DRX configuration of the peer.

(Example 3-3) The UE 100 notifies the RRC reconfiguration sidelink message and the RRC reconfiguration complete sidelink message, each of the messages including only the sidelink DRX configuration of the UE 100.

(Example 4) The UE 100 transmits a sidelink DRX adjustment request message to the peer UE.

(Example 5) The UE 100 requests the gNB 200 to change the sidelink DRX configuration.

(Example 6) The gNB 200 performs sidelink DRX configuration when configuring sidelink resources.

Example 1

The 3GPP is about to start studying Discontinuous Reception (DRX) in the sidelink communication. The discontinuous reception in the sidelink communication may be referred to as the "sidelink DRX".

To be more specific, for example, objectives of the study are to define On-duration and Off-duration in the sidelink DRX, to specify a mechanism for matching a sidelink DRX wake-up time among UEs 100, or to specify a mechanism for matching the sidelink DRX wake-up time with a UuDRX wake-up time in the coverage range.

In the sidelink DRX, power consumption reduction in the UE 100 is expected, similar to the DRX between the UE 100 and the gNB 200.

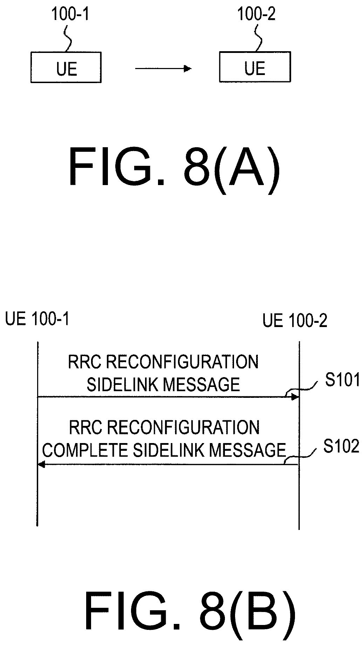

On the other hand, FIG. 8(A) is a diagram illustrating an example of a case where the sidelink communication is about to be performed between the UEs 100-1 and 100-2. In the example of FIG. 8(A), the UE 100-1 is a transmitting end, and UE 100-2 is a receiving end.

FIG. 8(B) is a diagram illustrating a sequence example of sidelink RRC reconfiguration (SidelinkRRCReconfiguration). Between the UEs 100-1 and 100-2, performing such a sequence of the sidelink RRC reconfiguration enables the sidelink communication.

In step S101, the UE 100-1 transmits an RRC reconfiguration sidelink (RRCReconfigurationSidelink) message to the UE 100-2. The RRC reconfiguration sidelink message is a message for transmitting configuration information for the PC5 connection between the UEs 100-1 and 100-2 and the like (or a message including configuration information related to the sidelink communication), such as establishment, change, or opening of a sidelink Data Radio Bearer (DRB) or configuration of New Radio (NR) sidelink measurement and report, for example. Alternatively, the RRC reconfiguration sidelink message may be, for example, a command for the Access Stratum (AS) of the PC5-RRC connection.

In step S102, the UE 100-2 transmits an RRC reconfiguration complete sidelink (RRC ReconfigurationCompleteSidelink) message. This processing is performed, for example, when the UE 100-2 accepts the configuration information included in the RRC reconfiguration sidelink message received in step S101. The RRC reconfiguration complete sidelink message is, for example, a message used to confirm that the PC5-RRC AS reconfiguration is successfully complete (or a message related to completion of configuration of the sidelink communication).

Such a sidelink reconfiguration sequence makes a PC5-RRC connection between the UEs 100-1 and 100-2, enabling data transmission and reception between the UEs 100-1 and 100-2.

Note that the UE 100-2 can also transmit an RRC reconfiguration failure sidelink (RRCReconfigurationFailureSidelink) message when not accepting the configuration information included in the RRC reconfiguration sidelink message received in step S101. The RRC reconfiguration failure sidelink message is, for example, a message used to indicate a failure of PC5-RRC AS reconfiguration (or configuration).

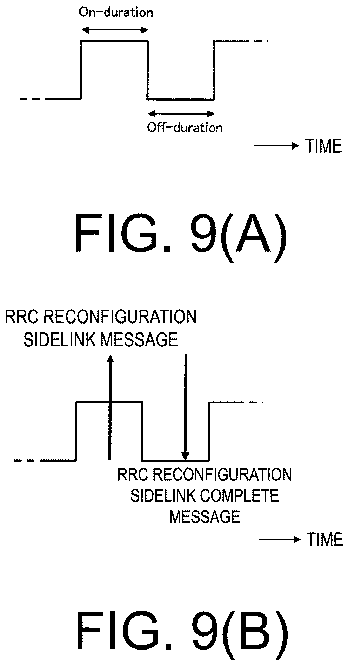

FIG. 9(A) is a diagram illustrating an example of On-duration (which may hereinafter be referred to as "Onduration") and Off-duration (which may hereinafter be referred to as "Offduration") in the sidelink DRX. For example, in the period of Onduration, the UE 100 transmits and receives messages or data. On the other hand, in the period of Offduration, the UE 100, for example, stops (or suspends) transmission and reception of messages or data. Accordingly, this configuration allows the UE 100 to reduce power consumption compared to a configuration in which the sidelink DRX is not performed. A period including On-duration and Off-duration (in other words, for example, the period between the start point of certain On-duration and the start point of the next On-duration) may be referred to as a DRX cycle.

FIG. 9(B) is a diagram illustrating an example of a relationship between each period of the sidelink DRX and messages. As illustrated in FIG. 9(B), the UE 100-1 transmits the RRC reconfiguration sidelink message in Onduration. However, in Offduration, the UE 100-2 may transmit the RRC reconfiguration complete sidelink message. In this case, the UE 100-1 fails to receive the RRC reconfiguration complete sidelink message. Accordingly, no PC5-RRC connection may be made between the UE 100-1 and the UE 100-2.

In Example 1, the sidelink DRX is not applied during the sequence of the sidelink RRC reconfiguration. In other words, in Example 1, waiting for reception of the RRC reconfiguration complete sidelink message is prioritized over the sidelink DRX.

In other words, when the discontinuous reception is configured between the UE 100-1 and the UE 100-2 at the time of transmission of the RRC message including the configuration information related to the sidelink communication, the UE 100-1 performs processing for waiting to receive the response message responding to the RRC message regardless of the configuration of the discontinuous reception. The UE 100-1 receives the response message transmitted from the UE 100-2. Accordingly, even when the discontinuous reception in the sidelink communication is configured, the UE 100-1 configures the sidelink communication by receiving the response message and makes a PC5-RRC connection to the UE 100-2, enabling the sidelink communication.

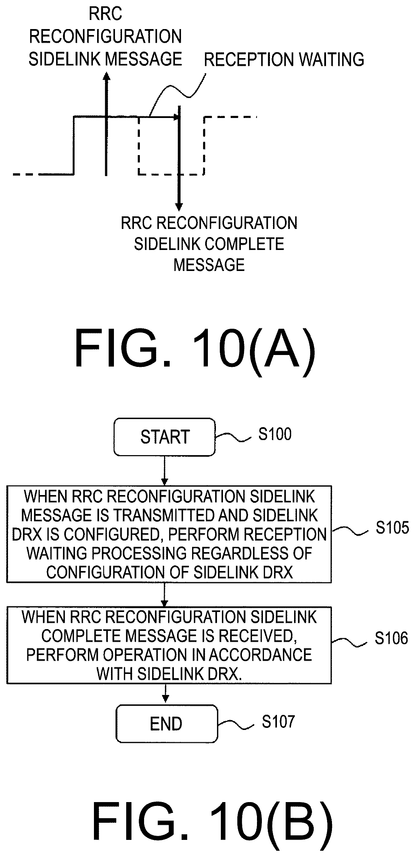

FIG. 10(A) is a diagram illustrating an example in which waiting for reception is prioritized. As illustrated in FIG. 10(A), after transmitting the RRC reconfiguration sidelink message, the UE 100-1 prioritizes waiting for reception over the sidelink DRX. The UE 100-1 performs processing for waiting for reception until the RRC reconfiguration sidelink complete message is received. Upon receipt of the RRC reconfiguration sidelink complete message, the UE 100-1 resumes the sidelink DRX.

FIG. 10(B) is a diagram illustrating an operation example of the UE 100-1.

In step S100, the UE 100-1 starts the processing.

In step S105, when the sidelink DRX is configured at the time of transmission of the RRC reconfiguration sidelink message, the UE 100-1 performs the processing for waiting for reception regardless of the configuration of the sidelink DRX. The UE 100-1 may extend the Onduration period of the sidelink DRX instead of performing the processing for waiting for reception. Alternatively, the UE 100-1 may suspend the Offduration period. Alternatively, the UE 100-1 may stop the Onduration timer until the RRC reconfiguration complete sidelink message is received. Alternatively, the UE 100-1 may exclude the application of the configuration of the sidelink DRX or may cancel the application. Alternatively, the UE 100-1 may discard the configuration of the sidelink DRX.

In step S106, upon receiving the RRC reconfiguration sidelink complete message, the UE 100-1 performs an operation according to the configuration of the sidelink DRX. Alternatively, the UE 100-1 may return to the original operation of the sidelink DRX. In other words, the UE 100-1 performs an operation for waiting for reception in accordance with the sidelink DRX. Alternatively, UE 100-1 may stop the processing for stopping the Onduration period. The UE 100-1 may resume the suspended Offduration period. Alternatively, the UE 100-1 may resume (or reset) the stopped Onduration timer. Alternatively, the UE 100-1 may apply (or reapply) the configuration of the sidelink DRX.

In Step S107, the UE 100-1 ends the series of processing operations.

As described above, in Example 1, when the sidelink DRX is configured at the time of transmission of the RRC reconfiguration sidelink message, the UE 100 prioritizes the processing for waiting for reception over the sidelink DRX. Accordingly, even the UE 100 to which sidelink DRX is applied can perform a series of sequences of the sidelink RRC reconfiguration, enabling a PC5-RRC connection between the UE 100-1 and the UE 100-2.

Example 2

In the sidelink DRX, Onduration and Offduration are performed at the same timing between the UE 100-1 and the UE 100-2. Accordingly, a problem is how to match the timing between the UE 100-1 and the UE 100-2. To be more specific, the problem is how to match the timing of wake-up (in other words, the transmission timing of the UE 100-1 and the discontinuous reception timing of the UE 100-2 according to the sidelink DRX) between the UE 100-1 and the UE 100-2, and to perform the operation of the sidelink DRX using Onduration and Offduration.

In Example 2, periodic boundaries of the sidelink DRX are reset at the time of transmission or reception of the RRC reconfiguration sidelink message or at the time of transmission or reception of the RRC reconfiguration complete sidelink message.

In other words, the frame number of a predetermined frame is reset at the timing when the UE 100-1 transmits the RRC message including the configuration information related to the sidelink communication or at the timing when the UE 100-2 receives the RRC message transmitted from the UE 100-1. Alternatively, the frame number of the predetermined frame is reset at the timing when the UE 100-2 transmits the RRC message related to the completion of the configuration of the sidelink communication or at the timing when the UE 100-1 receives the RRC message related to the completion of the configuration, transmitted from the UE 100-2.

Thus, the UE 100-1 and the UE 100-2 can set the predetermined frame number to "0" at the same timing, enabling timing matching with reference to this timing.

Note that the predetermined frame may be a sidelink DRX frame (hereinafter may be referred to as a "DRX frame").

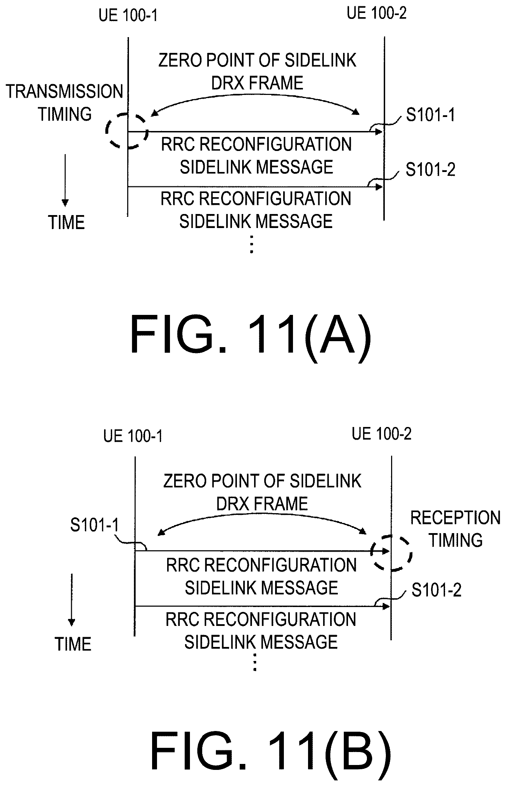

FIG. 11(A) is a diagram illustrating an example in which the DRX frame is reset at an initial transmission timing of the times of transmission when the RRC reconfiguration sidelink message is transmitted. Here, "initial transmission" refers to, for example, the first transmission (step S101-1) performed when the RRC reconfiguration sidelink message is retransmitted as illustrated in FIG. 11(A) (step S101-1, step S101-2, ...). As described above, since the RRC reconfiguration sidelink message may be transmitted many times, in the example of FIG. 11(A), the time of transmission of initial transmission of the message is used as the reset point.

In this case, the UE 100-1 notifies the receiving UE 100-2 of the timing of initial transmission of the RRC reconfiguration sidelink message, allowing the receiving UE 100-2 to determine the transmission timing. The transmission timing may be, for example, included in the RRC reconfiguration sidelink message in step S101-1 for transmission. Alternatively, the transmission timing may be transmitted in another message or the like.

Accordingly, both the transmitting UE 100-1 and the receiving UE 100-2 can determine the timing of the initial transmission of the RRC reconfiguration sidelink message. The UEs 100-1 and 100-2 uses this transmission timing as a zero point of the DRX frame. The zero point of the DRX frame corresponds to the same timing between the UEs 100-1 and 100-2, enabling timing matching for wake-up or the like with reference to the zero point.

FIG. 11(B) is an example in which the initial reception timing of the times of reception of the RRC reconfiguration sidelink message is used as the zero point of the DRX frame.

In the example in FIG. 11(B), when the RRC reconfiguration sidelink message is retransmitted (step S101-1, step S101-2, ...), the initial reception timing of the RRC reconfiguration sidelink message (step S101-1) is used as a timing of the zero point of the DRX frame.

The reception timing of the initial transmission of the RRC reconfiguration sidelink message may be included in a Negative Acknowledgment (NACK) message responding to the initial transmission of the RRC reconfiguration sidelink message. The negative acknowledgment message is, for example, a message transmitted to the transmitting UE 100-1 when the UE 100-2 fails to successfully receive the initial transmission of the RRC reconfiguration sidelink message. Thus, the reception timing can be notified to the transmitting UE 100-1. The reception timing may be included in a message other than the negative acknowledgment message for notification.

Then, the timing of the first reception of the RRC reconfiguration sidelink message can be shared between the transmitting UE 100-1 and the receiving UE 100-2. The UEs 100-1 and 100-2 use this timing as the zero point of the DRX frame to enable timing matching.

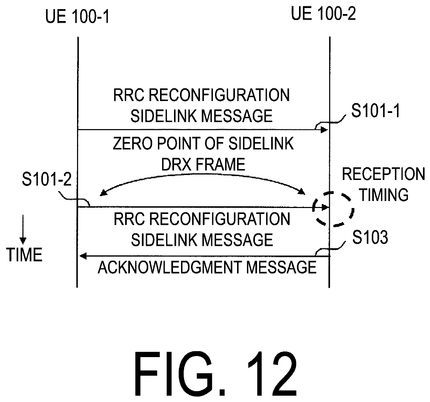

FIG. 12 is an example in which the RRC reconfiguration sidelink message is successfully received (or retransmission is successful) at one of the times of reception of the RRC reconfiguration sidelink message, the reception timing being used as the zero point of the DRX frame. In the example of FIG. 12, in the second transmission of the RRC reconfiguration sidelink message (step S101-2), the UE 100-2 transmits an Acknowledgment (ACK) message (step S103). Accordingly, the second reception timing of the RRC reconfiguration sidelink message (step S101-2) corresponds to the timing of successful reception of the RRC reconfiguration sidelink message.

The reception timing may be, for example, included in the acknowledgment message (step S103) or another message for transmission. Accordingly, the timing of the successful reception of the RRC reconfiguration sidelink message can be shared between the UEs 100-1 and 100-2. The UEs 100-1 and 100-2 use this timing as the zero point of the DRX frame to set the DRX frame to "0" at the same timing, enabling timing matching.

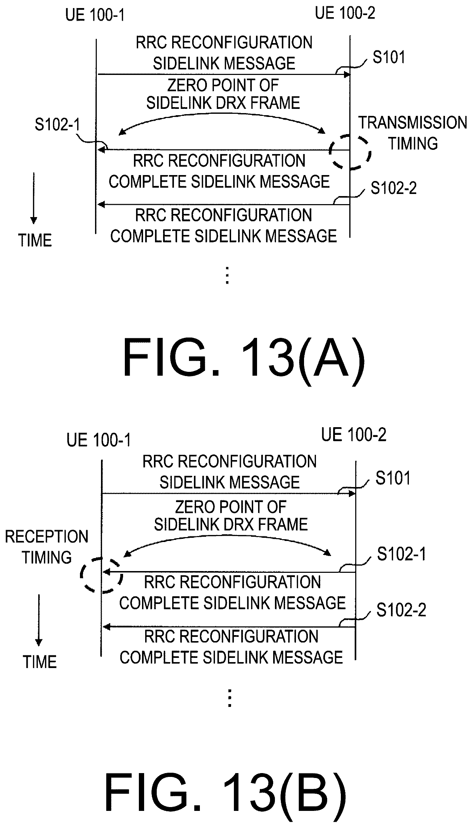

FIG. 13(A) is an example in which the time of reception of the RRC reconfiguration complete sidelink message is used as the zero point of the DRX frame.

In other words, the example of FIG. 13(A) represents the case in which the UE 100-2 transmits the RRC reconfiguration complete side message responding to the RRC reconfiguration sidelink message (step S101) but in which the UE 100-1 fails to successfully receive the message, which is thus retransmitted (step S102-1, step S102-2, ...).

FIG. 13(A) is an example in which a timing of the time of transmission of the initial transmission of the RRC reconfiguration complete sidelink message among the RRC reconfiguration complete sidelink messages retransmitted as described above (step S102-1) is used as the zero point of the DRX frame.

Also in this case, the transmission timing may be transmitted to the UE 100-1 by using, for example, the RRC reconfiguration complete sidelink message or another message.

The UEs 100-1 and 100-2 use the timing of the initial transmission of the RRC reconfiguration complete sidelink message as the zero point of the DRX frame to set the DRX frame to "0" at the same timing, enabling timing matching between the UEs 100-1 and 100-2.

FIG. 13(B) is an example in which the time of reception of the RRC reconfiguration complete sidelink message is used as the zero point of the DRX frame. In other words, in the example of FIG. 13(B), the RRC reconfiguration sidelink message (step S101) is transmitted, and then the reception timing of the initial transmission of the RRC reconfiguration complete sidelink message (step S102-1) is used as the zero point of the DRX frame.

In this case, the UE 100-1 may include the reception timing of the initial transmission of the RRC reconfiguration complete sidelink message in a negative acknowledgment message responding to the initial transmission of the RRC reconfiguration complete sidelink message or in another message or the like for transmission to the UE 100-2.

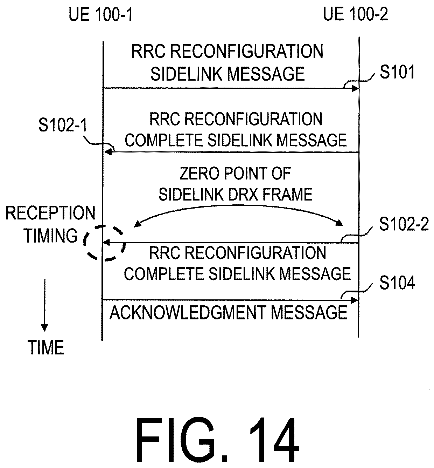

FIG. 14 is an example in which the zero point of the DRX frame corresponds to the timing of successful reception of the RRC reconfiguration complete sidelink message, in other words, the timing of successful retransmission of the RRC reconfiguration complete sidelink message. Note that each of the various zero points described above including the one in FIG. 14 may correspond to the transmission or reception timing of the acknowledgment message (ACK).

In the example of FIG. 14, the UE 100-1 transmits the RRC reconfiguration sidelink message (step S101), the second reception of the RRC reconfiguration complete sidelink message (step S102-2) is successful, and the reception timing of this message is used as the zero point of the DRX frame.

The reception timing may be, for example, included in the acknowledgment message (step S104) or another message or the like for transmission to the UE 100-2.

In both FIGs. 13(B) and 14, the UEs 100-1 and 100-2 can set the DRX frame to the zero point at the same timing with reference to the reception timing. This enables timing matching between the UEs 100-1 and 100-2.

In the examples of FIGs. 11(A), 11(B), 12, 13(A), 13(B), and 14 described above, the DRX frame is set to "0". The UEs 100-1 and 100-2 can perform the sidelink DRX by using the DRX frame set to "0" at the same timing.

Here, the frame number of the DRX frame will be described. The DRX frame number and a DRX subframe number may respectively be calculated by the following equations.

[DRX frame number] = ([current SFN (System Frame Number)] - [SFN at zero point]) mod 1024       (2)

$$[\text{DRX subframe number}] = ([\text{current SFN}] - [\text{SFN at zero point}]) \bmod 10 \dots(2)$$

These equations may be stored in a memory within the controller 130, for example. By storing, in a memory or the like, the acquired SFN at the zero point when calculating the DRX frame number, the UEs 100-1 and 100-2 can calculate the DRX frame or the DRX subframe by using Equation (1) or Equation (2).

Note that, in the above-described example including Equation (1) or Equation (2), a Direct Frame Number (DFN) may be used instead of the SFN. Alternatively, in the above-described example including Equation (1) or Equation (2), a time frame derived from a reference time (for example, a Global Positioning System (GPS) time or the like) may be used instead of the SFN. Here, the time unit (frame number unit) of the time frame is to be 10 ms.

For example, the UE 100-1 uses the SFN, whereas the UE 100-2 uses the DFN. Even when the frame number is mismatched between the UEs 100-1 and 100-2, the use of the DRX frame enables timing synchronization between the UEs 100-1 and 100-2. Even when the UEs 100-1 and 100-2 exist in different cells, which are asynchronous, the use of the DRX frame enables timing synchronization between the UEs 100-1 and 100-2.

However, the DRX frame is managed for each PC5-RRC connection. In other words, other PC5-RRC connections operate in other DRX frames. For example, a DRX frame number of the DRX frame between the UE 100-1 and the UE 100-2 may be different from a DRX frame number of the DRX frame between the UE 100-2 and a UE 100-3 at a certain timing.

By adjusting the transmission timing of the PC5-RRC message such as the RRC reconfiguration sidelink message or the RRC reconfiguration complete sidelink message, the UE 100 can obtain an effect equivalent to the effect of known timing adjustment based on offset value configuration.

Example 3

Example 3 is an example in which the RRC reconfiguration sidelink message is transmitted that includes both the sidelink DRX configuration of the UE and the sidelink DRX configuration of the peer.

In other words, the UE 100-1 transmits an RRC message including first configuration information related to the configuration of the discontinuous reception in the sidelink communication of the UE 100-1 and second configuration information related to the configuration of the discontinuous reception in the sidelink communication of the UE 100-2. The UE 100-2 receives the RRC message. Thus, the sidelink DRX configuration can be shared and applied between the UEs 100-1 and 100-2.

The DRX configuration in the Uu interface is performed using an RRC reconfiguration (RRCReconfiguration) message. On the other hand, the sidelink DRX may be configured using the RRC reconfiguration sidelink message. Hereinafter, how the sidelink DRX configuration (which may hereinafter be referred to as the "DRX configuration") is performed will be described.

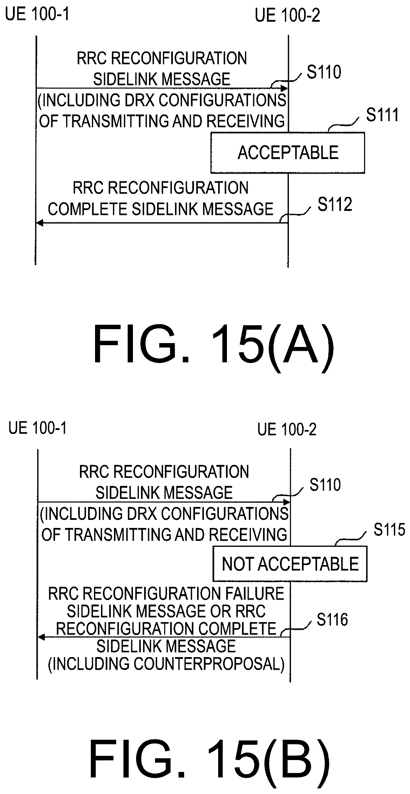

FIGs. 15(A) and 15(B) are diagrams illustrating an operation example of Example 3. The UE 100-1 corresponds to the transmitting end and the UE 100-2 corresponds to the receiving end.

In step S110, the UE 100-1 transmits the RRC reconfiguration sidelink message including the configuration information of the DRX configuration of the UE 100-1 (transmitting end) and the configuration information of the DRX configuration of the peer (receiving end). Here, the DRX configuration of the UE 100-1 is the DRX configuration of UE 100-1 itself. The DRX configuration of the peer is, for example, the DRX configuration of the peer (receiving end) UE 100-2 desired by the UE 100-1 (transmitting end). The DRX configuration may include, for example, periodicity related to Onduration and Offduration, a Quality of Service (QoS) latency. The UE 100-1 transmits the DRX configuration of the UE 100-1 and the DRX configuration of the peer desired by the UE 100-1, to the peer UE 100-2. Such information is included in the RRC reconfiguration sidelink message as configuration information, and the RRC reconfiguration sidelink message is transmitted.

In step S111, the peer UE 100-2 determines whether the received DRX configurations of the transmitting and receiving ends are acceptable, and when the DRX configurations are acceptable, the UE 100-2 transmits the RRC reconfiguration complete sidelink message to the UE 100-1 in step S112.

Subsequently, each of the UEs 100-1 and 100-2 can apply the configuration of the sidelink DRX accepted by the UE 1002, and transmit and receive data and the like in the period of Onduration.

On the other hand, as illustrated in FIG. 15(B), in step S115, the UE 100-2 determines whether the received DRX configurations of the transmitting and receiving ends are acceptable. When the DRX configurations are acceptable (or the UE 100-2 does not desire to accept the DRX configurations), in step 116, the UE 100-2 transmits an RRC reconfiguration failure sidelink message to UE 100-1.

In step 116, the UE 100-2 may transmit, instead of the RRC reconfiguration failure sidelink message, an RRC reconfiguration complete sidelink message including a counterproposal. The counterproposal is, for example, a sidelink DRX configuration desired by the receiving UE 100-2. An example of the counterproposal includes a reception timing desired by the UE 100-2.

For example, the UE 100-2 may transmit the RRC reconfiguration failure sidelink message, but in this case, the transmitting UE 100-1 may perform any other processing such as the notification, to the gNB 200, of a Failure in an attempt to configure the sidelink DRX. When the UE 100-2 transmits the RRC reconfiguration complete sidelink message including the counterproposal, such processing is not performed, and the processing can be made efficient.

In response to receiving the RRC reconfiguration complete sidelink message including the counterproposal, the transmitting UE 100-1 may end the procedure without performing further processing when the UE 100-1 can accept the counterproposal. Alternatively, the transmitting UE 100-1 may transmit the RRC reconfiguration sidelink message including a counterproposal configuration to the receiving UE 100-2 again.

On the other hand, when in response to receiving the RRC reconfiguration complete sidelink message including the counterproposal, the transmitting UE 100-1 does not accept the counterproposal, the UE 100-1 may transmit the RRC reconfiguration sidelink message including another counterproposal to the UE 100-2 again.

Example 3-1

In Example 3-1, the RRC reconfiguration sidelink message that includes a plurality of DRX configurations of the UE and a plurality of DRX configurations of the peer is transmitted.

For example, when a plurality of DRX configurations of the UE and a plurality of DRX configurations of the peer are notified, and the RRC reconfiguration sidelink message including the DRX configurations of the UE and the DRX configurations of the peer is transmitted a plurality of times, the number of times of transmission of the message increases correspondingly. Thus, negotiations may take time.

In Example 3-1, notifying a plurality of DRX configurations of the UE and a plurality of DRX configurations of the peer enables the DRX configuration to be performed in less time than providing notification a plurality of times.

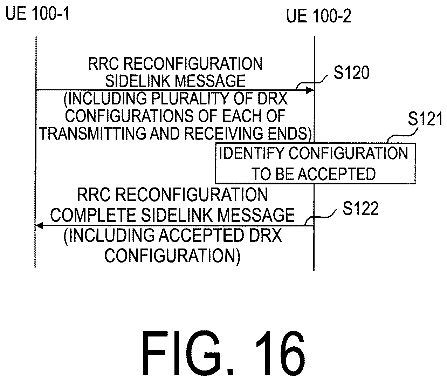

FIG. 16 is a diagram illustrating an operation example of Example 3-1.

In step S120, the transmitting UE 100-1 transmits, to the receiving UE 100-2, the RRC reconfiguration sidelink message including a plurality of DRX configurations of the UE 100-1 (transmitting end) and a plurality of DRX configurations of the peer (receiving end).

In this case, the UE 100-1 may respectively include the plurality of configurations of the UE 100-1 and the plurality of configurations of the peer in the RRC reconfiguration sidelink message as candidate lists. The UE 100-1 may provide a notification including the priorities of candidates in the sense that the desires of the UE 100-1 are notified. In this case, each entry (each DRX configuration) in the candidate list may include an identifier indicating a priority. Alternatively, the UE 100-1 may provide a notification including the entries of the candidate list sorted according to the priorities.

In step S121, the UE 100-2 identifies an acceptable DRX configuration from among the plurality of DRX configurations of the transmitting end and the plurality of DRX configurations of the receiving end. In this case, the UE 100-2 may select a DRX configuration compatible with a DRX configuration made with another UE connected by a PC5-RRC connection.

In step S122, the UE 100-2 transmits, to the UE 100-1, the RRC reconfiguration complete sidelink message including the identified DRX configuration. In this case, the UE 100-2 may include the accepted DRX configuration itself in the message for transmission. Alternatively, the UE 100-2 may include the entry number in the candidate list or the configuration number in the message for transmission.

Note that when the UE 100-2 cannot accept (or is dissatisfied with) all the DRX configurations included in the RRC reconfiguration sidelink message (cannot accept the candidate list of the DRX configurations), the UE 100-2 may transmit the RRC reconfiguration failure sidelink message to the UE 100-1. In this case, the UE 100-2 may include cause information in the RRC reconfiguration failure sidelink message for transmission, the cause information indicating that the DRX configuration is unacceptable.

Example 3-2

As a variation of Example 3-1 described above, the UE 100 may transmit the RRC reconfiguration sidelink message and the RRC reconfiguration complete sidelink message each including only the DRX configurations of the peer (receiving end).

In this case, for example, in step S120 of FIG. 16, the transmitting UE 100-1 transmits the RRC reconfiguration sidelink message including the DRX configurations of the peer (receiving end) and including no DRX configurations of the UE 100-1 (transmitting end).

In step S121, the receiving UE 100-2 identifies an acceptable DRX configuration from among the DRX configurations of the peer (receiving end).

In step S122, the receiving UE 100-2 transmits the RRC reconfiguration complete sidelink message including the identified DRX configuration of the peer (receiving end) to the UE 100-1.

Also in Example 3-2, the UE 100-1 may transmit only the DRX configurations of a plurality of peers (receiving ends) in step S120.

Example 3-3

As a variation of Example 3-2 described above, the UE 100 may transmit the RRC reconfiguration sidelink message and the RRC reconfiguration complete sidelink message each including only the DRX configurations of the UE 100 (transmitting end).

In this case, for example, in step S120 of FIG. 16, the transmitting UE 100-1 transmits the RRC reconfiguration sidelink message including the DRX configurations of the UE 100-1 (transmitting end) and including no DRX configurations of the peer (receiving end).

In step S121, the receiving UE 100-2 identifies an acceptable DRX configuration from among the DRX configurations of the UE 100-1 (transmitting end).

In step S122, the receiving UE 100-2 transmits the RRC reconfiguration complete sidelink message including the identified DRX configuration of the UE 100-1 (transmitting end) to the UE 100-1.

Also in Example 3-3, the UE 100-1 may transmit only the plurality of DRX configurations of the UE 100-1 (transmitting end) in step S120.

In Example 3-3, the transmitting UE 100-1 notifies the receiving UE 100-2 of the DRX reception configuration of the UE 100-1 from among the DRX configurations of the UE 100-1 (transmitting end).

Example 4

Example 4 is an example in which, when the sidelink DRX needs to be adjusted, the UE 100 transmits a sidelink DRX adjustment request message (which may hereinafter be referred to as the "adjustment request message") to the peer UE.

In other words, the UE 100-1 transmits an RRC message including configuration information related to the discontinuous reception in the sidelink communication, and the UE 100-2 receives the RRC message. The UE 100-2 transmits, to the UE 100-1, the adjustment request message for requesting adjustment of configuration of the discontinuous reception in the sidelink communication.

In Example 4, operations are based on, for example, concepts described below. In other words, the sidelink DRX configuration using the RRC reconfiguration sidelink message involves no right to refuse. In response to receiving the sidelink DRX configuration, the UE 100 hastens to accept this configuration. When being dissatisfied with the sidelink DRX configuration, the UE 100 adjusts the sidelink DRX configuration using the adjustment request message.

In response to receiving the sidelink DRX configuration through the RRC reconfiguration sidelink message, the UE 100 can reduce the latency in the start of data transmission by accepting this configuration. On the other hand, when being dissatisfied with the configuration, the UE 100 can make an objection using the adjustment request message. The adjustment request message may be a message for the UE 100 to request adjustment of the sidelink DRX configuration.

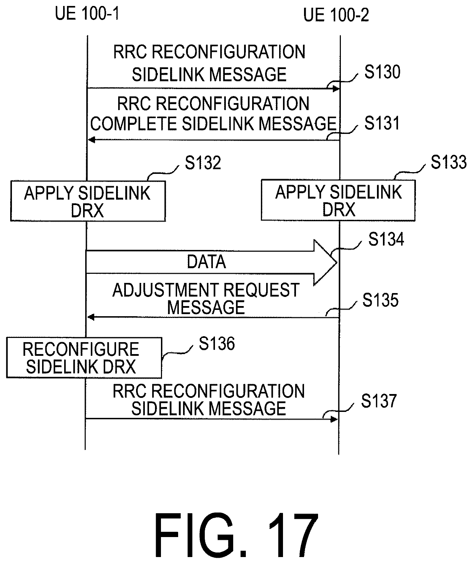

FIG. 17 is a diagram illustrating an operation example of Example 4.

In step S130, the transmitting UE 100-1 transmits the RRC reconfiguration sidelink message including the configuration information of the sidelink DRX configuration to the receiving UE 100-2.

In step S131, the receiving UE 100-2 accepts the DRX configuration and transmits the RRC reconfiguration complete sidelink message to the transmitting UE 100-1.

In steps S132 and S133, the transmitting UE 100-1 and the receiving UE 100-2 apply the DRX configuration.

In step S134, the transmitting UE 100-1 transmits data to the receiving UE 100-2 during the period of Onduration.

In step S135, when requiring adjustment of the DRX configuration, the receiving UE 100-2 transmits the adjustment request message to the transmitting UE 100-1. As is the case with Example 3-1, the adjustment request message may include a plurality of candidate configurations (preferences) related to the DRX configuration. The adjustment request message may be the RRC reconfiguration sidelink message, or may be a new message, for example, a sidelink DRX reconfiguration request (SidelinkDRXReconfigurationRequest) message.

In step S136, the transmitting UE 100-1 re-examines the DRX configuration and reconfigures the sidelink DRX in view of the adjustment request message.

In step S137, the transmitting UE 100-1 transmits, to the receiving UE 100-2, the RRC reconfiguration sidelink message including the configuration information of the reconfigured DRX configuration. In this case, the message transmitted by the transmitting UE 100-1 may be a new message with only the DRX configuration changed, for example, a sidelink DRX reconfiguration (SidelinkDRXReconfiguration) message, instead of the RRC reconfiguration sidelink message.

Note that in the example described above, an example is described in which the receiving UE 100-2 transmits the adjustment request message. For example, the transmitting UE 100-1 may transmit the adjustment request message. In this case, in response to receiving the adjustment request message, the receiving UE 100-2 may perform sidelink reconfiguration and transmit, to the transmitting UE 100-1, the RRC reconfiguration sidelink message or the like including the configuration information of the reconfigured sidelink DRX configuration.

Example 5

In Example 5, the UE 100 notifies the gNB 200 of assistant information or requests the gNB 200 to change the sidelink DRX configuration.

In other words, the UE 100-1 transmits an RRC message including configuration information related to the discontinuous reception in the sidelink communication, and the UE 100-2 receives the RRC message. The UE 100-2 transmits, to the gNB 200, a sidelink information message for requesting a change in the configuration of the discontinuous reception of the sidelink communication.

Example 4 is an example in which the UE 100 transmits the adjustment request message to the peer UE to adjust the sidelink DRX in the peer UE. Example 5 is an example in which, when the UE 100 transmits the sidelink information message for requesting a change in sidelink DRX configuration to the gNB 200, and the sidelink DRX is adjusted in the gNB 200. The gNB 200 can change the configuration of the DRX between the gNB 200 and the UE 100 (which may hereinafter be referred to as "UuDRX") and can also change the sidelink DRX configuration, enabling the processing to be made efficient. The concepts described in Example 4 may be applied to Example 5.

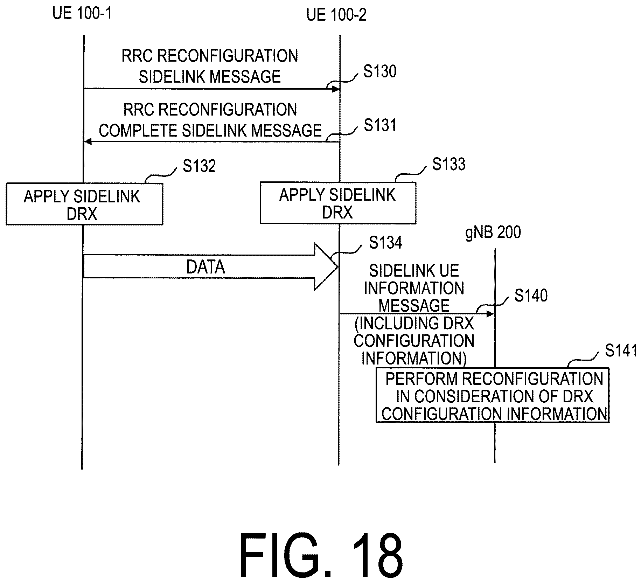

FIG. 18 is a diagram illustrating an operation example of Example 5.

Steps S130 to S134 are identical to the corresponding steps in Example 4.

In step S140, the receiving UE 100-2 transmits, to gNB 200, a sidelink UE information (SidelinkUEInformation) message including DRX configuration information.

The DRX configuration information may include desired configuration values for UuDRX. The DRX configuration information may include at least a DRX cycle and an offset as desired configuration values and may optionally include an Onduration timer value.

The DRX configuration information may be a configuration value of the sidelink DRX. The configuration value of the sidelink DRX may be the configuration value currently applied (steps S132 and S133). The DRX configuration information includes at least the DRX cycle and the offset as configuration values and may optionally include the Onduration timer value. The configuration value may include a plurality of sidelink DRX configuration values. The plurality of sidelink DRX configuration values may or may not be associated with respective destinations. Furthermore, when the DFN or the DRX frame described in Example 2 is used for the configuration value, the configuration value may be a value converted into the SFN.

Furthermore, the DRX configuration information may be a sidelink DRX configuration value desired for the peer UE 100 (UE 100-1 in the example of FIG. 18). This configuration value itself may be the same as the sidelink DRX configuration value described above.

In step S141, the gNB 200 performs reconfiguration in consideration of the DRX configuration information included in the sidelink UE information message. For the reconfiguration, the gNB 200 may reconfigure the UuDRX configuration of the UE 100-2. Alternatively, for the reconfiguration, the gNB 200 may reconfigure the sidelink DRX configuration of the UE 100-2. Alternatively, for the reconfiguration, the gNB 200 may reconfigure the sidelink DRX configuration of the peer (UE 100-1 in the example of FIG. 18).

Note that, for example, the gNB 200 may transmit the reconfigured sidelink DRX configuration to the UE 100-1 or the UE 100-2 (or both the UEs 100-1 and 100-2) by using a Physical Downlink Shared CHannel (PDSCH) or broadcast information. The gNB 200 may transmit the reconfigured UuDRX configuration to the UE 100-2 using the PDSCH or broadcast information.

In the example described above, the receiving UE 100-2 notifies the gNB 200 of the DRX configuration information. The transmitting UE 100-1 may transmit, to the gNB 200, the sidelink UE information message including the DRX configuration information. This example can be implemented similarly to the above-described examples by designating the peer UE as the receiving UE 100-2.

Example 6

In the above-described Examples, an example is described in which the sidelink DRX configuration is mainly made between UEs 100. Example 6 is an example in which, when configuring resources used for the sidelink communication, the gNB 200 also configures the sidelink DRX.

In other words, the gNB 200 transmits the RRC message including the configuration information related to the configuration of the discontinuous reception in the sidelink communication or broadcasts system information including the configuration information. The UEs 100-1 and 100-2 receive the RRC message and applies the configuration of the discontinuous reception in the sidelink communication.

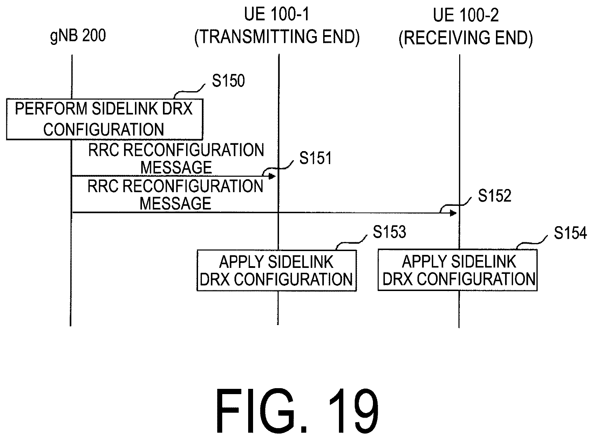

FIG. 19 is a diagram illustrating an operation example of Example 6.

In step S150, the gNB 200 configures the sidelink DRX of the UE 100 (UE 100-1 and UE 100-2 in the example of FIG. 19).

In steps S151 and S152, the gNB 200 transmits, to the UE 100-1 and the UE 100-2, an RRC reconfiguration (RRCReconfiguration) message including the configuration information of the configured sidelink DRX configuration. The configuration information may be broadcasted by using a System Information Block (SIB) instead of the RRC reconfiguration message. The configuration information may include all or part of the DRX configuration information described in Example 5. When the configuration information includes part of the DRX configuration information, for example, the part of the DRX configuration information may include only the DRX cycle and the Onduration timer, and the UE 100 may determine other DRX configuration information (for example, off-time and the like). This is a hybrid operation in which the gNB 200 configures a part of the sidelink DRX configuration, whereas the UE 100 configures another part of the sidelink DRX configuration. Alternatively, the configuration information may be provided (or associated) for each resource pool.

In steps S153 and S154, the transmitting UE 100-1 and the receiving UE 100-2 apply the sidelink DRX configuration notified from the gNB 200.

In this case, the transmitting UE 100-1 may transmit the RRC reconfiguration sidelink message including the sidelink DRX configuration to the receiving UE 100-2 in consideration of the sidelink DRX configuration notified from the gNB 200. For example, among the sidelink DRX configurations, the UE 100-1 may determine the offset and use other sidelink DRX configurations configured by the gNB 200, and the UE 100-1 may include the sidelink DRX configurations including those described above in the RRC reconfiguration sidelink message for notification. In this case, in expectation that other sidelink DRX configurations have been transmitted from the gNB 200 to the UE 100-2, the UE 100-1 may include the sidelink DRX configuration determined by the UE 100-1 itself in the RRC reconfiguration sidelink message for notification.

Other Embodiments

A program causing a computer to execute each of the processes performed by the UE 100 or the gNB 200 may be provided. The program may be recorded in a computer readable medium. Use of the computer readable medium enables the program to be installed on a computer. Here, the computer readable medium on which the program is recorded may be a non-transitory recording medium. The non-transitory recording medium is not particularly limited, and may be, for example, a recording medium such as a CD-ROM or a DVD-ROM.

Circuits for executing the processes to be performed by the UE 100 or the gNB 200 may be integrated, and at least part of the UE 100 or the gNB 200 may be configured as a semiconductor integrated circuit (a chipset or an SoC).

Although an embodiment has been described in detail with reference to the drawings, a specific configuration is not limited to those described above, and various design modifications and the like can be made without departing from the gist. All of or a part of the examples can be combined together as long as the combination remains consistent.

Further embodiments of the present invention are described in the following.

1. A communication control method in a mobile communication system comprising a first user equipment and a second user equipment, the first user equipment and the second user equipment being configured to perform sidelink communication with each other, the communication control method comprising:

when the first user equipment transmits a Radio Resource Control (RRC) message comprising configuration information related to the sidelink communication, and discontinuous reception is configured between the first user equipment and the second user equipment, performing, by the first user equipment, waiting processing for reception of an RRC response message responding to the RRC message regardless of a configuration of the discontinuous reception;

when the second user equipment receives the RRC message, transmitting, by the second user equipment, the RRC response message responding to the RRC message; and

receiving, by the first user equipment, the RRC response message.

2. The communication control method according to embodiment 1, wherein the first user equipment performs the waiting processing by extending or suspending an Onduration period of the discontinuous reception.

3. The communication control method according to embodiment 1, wherein the first user equipment performs the waiting processing by stopping an Onduration timer for the discontinuous reception until the first user equipment receives the RRC response message.

4. The communication control method according to embodiment 1, wherein the first user equipment performs the waiting processing by excluding application of the configuration of the discontinuous reception or by discarding the configuration of the discontinuous reception.

5. The communication control method according to embodiment 1, further comprising when the first user equipment receives the RRC response message, performing, by the first user equipment, an operation in accordance with the configuration of the discontinuous reception.

6. A communication control method in a mobile communication system comprising a first user equipment and a second user equipment, the first user equipment and the second user equipment being configured to perform sidelink communication with each other, the communication control method comprising:

resetting a frame number of a predetermined frame at a timing when the first user equipment transmits a first RRC message comprising configuration information related to the sidelink communication or at a timing when the second user equipment receives the first RRC message transmitted from the first user equipment, or resetting the frame number of the predetermined frame at a timing when the second user equipment transmits a second RRC message related to completion of a configuration of the sidelink communication or at a timing when the first user equipment receives the second RRC message transmitted from the second user equipment.

7. The communication control method according to embodiment 6, wherein when the first user equipment retransmits the first RRC message or the second user equipment retransmits the second RRC message, the frame number of the predetermined frame is reset at a timing of initial transmission of the first RRC message or the second RRC message.

8. The communication control method according to embodiment 6, wherein when the first user equipment retransmits the first RRC message or the second user equipment retransmits the second RRC message, the frame number of the predetermined frame is reset at a timing when reception of the first RRC message or the second RRC message succeeds.

9. The communication control method according to embodiment 6, wherein

the predetermined frame is a sidelink Discontinuous Reception (DRX) frame,

a frame number of the sidelink DRX frame is calculated by {([current System Frame Number (SFN)] - [SFN at a zero point of the sidelink DRX frame]) mod 1024}, and

a subframe number of the sidelink DRX frame is calculated by {([current SFN] - [SFN at the zero point of the sidelink DRX frame]) mod 10}.

10. A communication control method in a mobile communication system comprising a first user equipment and a second user equipment, the first user equipment and the second user equipment being configured to perform sidelink communication with each other, the communication control method comprising:

transmitting, by the first user equipment, an RRC message comprising first configuration information related to a configuration of discontinuous reception in the sidelink communication of the first user equipment and second configuration information related to a configuration of discontinuous reception in the sidelink communication of the second user equipment; and

receiving, by the second user equipment, the RRC message.

11. The communication control method according to embodiment 10, further comprising transmitting, by the second user equipment, a first RRC reconfiguration complete sidelink message when a configuration based on the first configuration information and the second configuration information is acceptable, and transmitting, by the second user equipment, an RRC reconfiguration failure sidelink message or a second RRC reconfiguration complete sidelink message comprising a counterproposal to the configuration based on the first configuration information and the second configuration information when the configuration based on the first configuration information and the second configuration information is not acceptable.

12. The communication control method according to embodiment 10, wherein the first configuration information and the second configuration information comprise a plurality of the configurations of the discontinuous reception.

13. The communication control method according to embodiment 12, wherein the plurality of the configurations of the discontinuous reception are prioritized.

14. The communication control method according to embodiment 10, further comprising transmitting, by the second user equipment, an RRC reconfiguration complete sidelink message comprising third configuration information related to a configuration accepted among the plurality of the configurations of the discontinuous reception, or transmitting, by the second user equipment, an RRC reconfiguration failure sidelink message when none of the plurality of the configurations of the discontinuous reception are accepted.

15. The communication control method according to embodiment 10, wherein the first user equipment transmits the RRC message comprising the second configuration information without comprising the first configuration information.

16. The communication control method according to embodiment 10, wherein the first user equipment transmits the RRC message comprising the first configuration information without comprising the second configuration information.

17. A communication control method in a mobile communication system comprising a base station apparatus, a first user equipment, and a second user equipment, the first user equipment and the second user equipment being configured to communicate wirelessly with the base station apparatus and to perform sidelink communication with each other, the communication control method comprising:

transmitting, by the first user equipment, an RRC message comprising configuration information related to discontinuous reception in the sidelink communication;

receiving, by the second user equipment, the RRC message; and

transmitting, by the second user equipment to the first user equipment, an adjustment request message requesting an adjustment of a configuration of the discontinuous reception in the sidelink communication, or transmitting, by the second user equipment to the base station apparatus, a sidelink information message requesting a change in the configuration of the discontinuous reception in the sidelink communication.

18. The communication control method according to embodiment 17, further comprising

reconfiguring, by the first user equipment, the discontinuous reception in the sidelink communication in response to receiving the adjustment request message.

19. The communication control method according to embodiment 17, wherein

the sidelink information message comprises a configuration value related to discontinuous reception between the second user equipment and the base station apparatus desired by the second user equipment, a configuration value related to the discontinuous reception in the sidelink communication applied between the first user equipment and the second user equipment, or a configuration value related to the discontinuous reception in the sidelink communication desired for the first user equipment.

20. A communication control method in a mobile communication system comprising a base station apparatus, a first user equipment, and a second user equipment, the first user equipment and the second user equipment being configured to communicate wirelessly with the base station apparatus and to perform sidelink communication with each other, the communication control method comprising:

transmitting, by the base station apparatus, an RRC message comprising configuration information related to a configuration of discontinuous reception in the sidelink communication, or broadcasting, by the base station apparatus, system information comprising the configuration information; and
by a first user equipment and a second user equipment, receiving the RRC message and then applying the configuration of the discontinuous reception in the sidelink communication.

21. The communication control method according to embodiment 20, further comprising:

transmitting, by the base station apparatus, the RRC message comprising the configuration information related to some configurations among a plurality of the configurations; and
by the first user equipment, determining remaining configurations excluding the some configurations among the plurality of the configurations and then transmitting, to the second user equipment, an RRC reconfiguration sidelink message comprising configuration information related to the remaining configurations.

The present application claims priority to Japanese Patent Application No. 2020-169444 (filed on October 6, 2020), the contents of which are incorporated herein by reference in their entirety.

REFERENCE SIGNS

10: Mobile communication system
100 (100-1 to 100-3): UE
110: Receiver
120: Transmitter
130: Controller
200 (200-1): gNB
200-2: ng-eNB
210: Transmitter
220: Receiver
230: Controller
240: Backhaul communicator

## Claims

1. A communication control method by a mobile communication system (10) comprising a first user equipment (100-1) and a second user equipment (100-2), and a base station (200), the first user equipment (100-1) and the second user equipment (100-2) being configured to perform sidelink communication with each other, the communication control method comprising:

receiving, by the second user equipment (100-2) from the first user equipment (100-1), an RRC reconfiguration sidelink message including configuration information related to a configuration of discontinuous reception in the sidelink communication of the second user equipment (100-2);

in response to the second user equipment (100-2) accepting the configuration according to the configuration information, transmitting, to the first user equipment, by the second user equipment, a first RRC message related to the RRC reconfiguration sidelink message and performing by the second user equipment (100-2), discontinuous reception according to the configuration information; and

in response to the second user equipment (100-2) accepting the configuration according to the configuration information, transmitting by the second user equipment (100-2), the configuration information included in the RRC reconfiguration sidelink message, to the base station (200).

2. A chipset controlling a second user equipment (100-2), the chipset comprising a processor and a memory coupled to the processor, the processor configured to

receive an RRC reconfiguration sidelink message from a first user equipment (100-1), the RRC reconfiguration sidelink message including configuration information related to a configuration of discontinuous reception in sidelink communication between the second user equipment (100-2) and the first user equipment (100-1),

in response to the second user equipment (100-2) accepting the configuration according to the configuration information, transmit to the first user equipment (100-1), a first RRC message related to the RRC reconfiguration sidelink message and perform discontinuous reception according to the configuration information,

in response to the second user equipment (100-2) accepting the configuration according to the configuration information, transmitting, the configuration information included in the RRC reconfiguration sidelink message, to a base station (200).

3. A user equipment comprising the chipset according to claim 2.

4. A computer program comprising instructions that, when the program is executed by a second user equipment (100-2) configured to perform sidelink communication with a first user equipment (100-1), cause the second user equipment (100-2) to carry out the method of claim 1.

5. A mobile communication system (10) comprising a first user equipment (100-1) and a second user equipment (100-2), the first user equipment (100-1) and the second user equipment (100-2) being configured to perform sidelink communication with each other, wherein
the second user equipment is (100-2) configured to:

receive, from the first user equipment (100-1), an RRC reconfiguration sidelink message including configuration information related to a configuration of discontinuous reception in the sidelink communication of the second user equipment (100-2);

in response to the second user equipment (100-2) accepting the configuration according to the configuration information, transmit to the first user equipment (100-1), a first RRC message related to the RRC reconfiguration sidelink message and perform discontinuous reception according to the configuration information; and

in response to the second user equipment (100-2) accepting the configuration according to the configuration information, transmit, the configuration information included in the RRC reconfiguration sidelink message, to the base station (200).

FIG. 1

FIG. 2

FIG. 3

100                    200

UE                     gNB

| SDAP | ⟷ | SDAP |
| PDCP | ⟷ | PDCP |
| RLC | ⟷ | RLC |
| MAC | ⟷ | MAC |
| PHY | ⟷ | PHY |

# FIG. 4

100        200        300

| UE | | gNB | | AMF |
|----|----|----|----|----|
| NAS | | | | NAS |
| RRC | | RRC | | |
| PDCP | | PDCP | | |
| RLC | | RLC | | |
| MAC | | MAC | | |
| PHY | | PHY | | |

# FIG. 5

100-1                                    100-2

UE A                                     UE B

| SDAP |  ←→  | SDAP |
| PDCP |  ←→  | PDCP |
| RLC  |  ←→  | RLC  |
| MAC  |  ←→  | MAC  |
| PHY  |  ←→  | PHY  |

# FIG. 6

100-1                    100-2

| UE A | | UE B | |
|---|---|---|---|
| RRC | ⟷ | RRC | |
| PDCP | ⟷ | PDCP | |
| RLC | ⟷ | RLC | |
| MAC | ⟷ | MAC | |
| PHY | ⟷ | PHY | |

# FIG. 7

100-1                    100-2

UE         ⟶         UE

# FIG. 8(A)

UE 100-1                         UE 100-2

RRC RECONFIGURATION
SIDELINK MESSAGE                         S101

RRC RECONFIGURATION
COMPLETE SIDELINK MESSAGE                S102

# FIG. 8(B)

On-duration

Off-duration

→ TIME

# FIG. 9(A)

RRC RECONFIGURATION
SIDELINK MESSAGE

RRC RECONFIGURATION
SIDELINK COMPLETE
MESSAGE

→ TIME

# FIG. 9(B)

RRC
RECONFIGURATION
SIDELINK MESSAGE    RECEPTION WAITING

RRC RECONFIGURATION
SIDELINK COMPLETE
MESSAGE

# FIG. 10(A)

START — S100

WHEN RRC RECONFIGURATION SIDELINK
MESSAGE IS TRANSMITTED AND SIDELINK
DRX IS CONFIGURED, PERFORM RECEPTION — S105
WAITING PROCESSING REGARDLESS OF
CONFIGURATION OF SIDELINK DRX

WHEN RRC RECONFIGURATION SIDELINK
COMPLETE MESSAGE IS RECEIVED, — S106
PERFORM OPERATION IN ACCORDANCE
WITH SIDELINK DRX.

END — S107

# FIG. 10(B)

UE 100-1    UE 100-2

ZERO POINT OF SIDELINK
DRX FRAME

TRANSMISSION
TIMING

S101-1

RRC RECONFIGURATION
SIDELINK MESSAGE

S101-2

RRC RECONFIGURATION
SIDELINK MESSAGE

TIME

# FIG. 11(A)

UE 100-1    UE 100-2

ZERO POINT OF SIDELINK
DRX FRAME

S101-1

RECEPTION
TIMING

RRC RECONFIGURATION
SIDELINK MESSAGE

S101-2

RRC RECONFIGURATION
SIDELINK MESSAGE

TIME

# FIG. 11(B)

UE 100-1                                    UE 100-2

RRC RECONFIGURATION
SIDELINK MESSAGE                          S101-1

ZERO POINT OF SIDELINK
DRX FRAME

S101-2                                    RECEPTION
                                          TIMING

RRC RECONFIGURATION
SIDELINK MESSAGE                          S103

TIME        ACKNOWLEDGMENT MESSAGE

# FIG. 12

UE 100-1                                  UE 100-2

RRC RECONFIGURATION
SIDELINK MESSAGE                          S101

ZERO POINT OF
SIDELINK DRX FRAME

S102-1                                    TRANSMISSION
                                          TIMING

RRC RECONFIGURATION
COMPLETE SIDELINK MESSAGE                 S102-2

RRC RECONFIGURATION
TIME    COMPLETE SIDELINK MESSAGE

⋮

# FIG. 13(A)

UE 100-1                                  UE 100-2

RRC RECONFIGURATION
SIDELINK MESSAGE                          S101

ZERO POINT OF
SIDELINK DRX FRAME

RECEPTION
TIMING                                    S102-1

RRC RECONFIGURATION
COMPLETE SIDELINK MESSAGE                 S102-2

RRC RECONFIGURATION
TIME    COMPLETE SIDELINK MESSAGE

⋮

# FIG. 13(B)

UE 100-1                                    UE 100-2

RRC RECONFIGURATION
SIDELINK MESSAGE                    S101

S102-1    RRC RECONFIGURATION
          COMPLETE SIDELINK MESSAGE

          ZERO POINT OF
          SIDELINK DRX FRAME

RECEPTION
TIMING                                              S102-2

          RRC RECONFIGURATION
          COMPLETE SIDELINK MESSAGE    S104

          ACKNOWLEDGMENT MESSAGE

TIME

# FIG. 14

UE 100-1                    UE 100-2

RRC RECONFIGURATION
SIDELINK MESSAGE                 S110
(INCLUDING DRX CONFIGURATIONS
OF TRANSMITTING AND RECEIVING     S111

ACCEPTABLE

RRC RECONFIGURATION
COMPLETE SIDELINK MESSAGE        S112

# FIG. 15(A)

UE 100-1                       UE 100-2

RRC RECONFIGURATION
SIDELINK MESSAGE                  S110
(INCLUDING DRX CONFIGURATIONS
OF TRANSMITTING AND RECEIVING      S115

NOT ACCEPTABLE

RRC RECONFIGURATION FAILURE
SIDELINK MESSAGE OR RRC
RECONFIGURATION COMPLETE         S116
SIDELINK MESSAGE
(INCLUDING COUNTERPROPOSAL)

# FIG. 15(B)

UE 100-1                                    UE 100-2

RRC RECONFIGURATION
SIDELINK MESSAGE ⟋ S120
(INCLUDING PLURALITY OF DRX
CONFIGURATIONS OF EACH OF
TRANSMITTING AND RECEIVING ENDS)

S121

IDENTIFY CONFIGURATION
TO BE ACCEPTED

RRC RECONFIGURATION
COMPLETE SIDELINK MESSAGE ⟋ S122
(INCLUDING ACCEPTED DRX
CONFIGURATION)

# FIG. 16

UE 100-1         UE 100-2

RRC RECONFIGURATION
SIDELINK MESSAGE   S130

RRC RECONFIGURATION
COMPLETE SIDELINK MESSAGE   S131

S132

| APPLY SIDELINK DRX | APPLY SIDELINK DRX |

S133

DATA   S134

ADJUSTMENT REQUEST
MESSAGE   S135

| RECONFIGURE SIDELINK DRX | S136 |

RRC RECONFIGURATION
SIDELINK MESSAGE   S137

# FIG. 17

UE 100-1                                    UE 100-2

RRC RECONFIGURATION
SIDELINK MESSAGE                          S130

RRC RECONFIGURATION
COMPLETE SIDELINK MESSAGE                 S131

S132                                          S133

APPLY SIDELINK
DRX                          APPLY SIDELINK
                                  DRX

                                              gNB 200

                                         S134

DATA                          SIDELINK UE
                              INFORMATION
                              MESSAGE              S140
                              (INCLUDING DRX
                              CONFIGURATION
                              INFORMATION)              S141

                              PERFORM RECONFIGURATION
                              IN CONSIDERATION OF DRX
                              CONFIGURATION INFORMATION

# FIG. 18

gNB 200 | UE 100-1 (TRANSMITTING END) | UE 100-2 (RECEIVING END)

S150 — PERFORM SIDELINK DRX CONFIGURATION

RRC RECONFIGURATION MESSAGE — S151

RRC RECONFIGURATION MESSAGE — S152

S153 — APPLY SIDELINK DRX CONFIGURATION

S154 — APPLY SIDELINK DRX CONFIGURATION

# FIG. 19

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020169444 A

**Non-patent literature cited in the description**

- *3GPP TS 38.300 V16.2.0*, July 2020